# EUROPEAN PATENT SPECIFICATION

(11) **EP 3 035 489 B1**
(45) Date of publication and mention of the grant of the patent: **23.02.2022**
(21) Application number: 15185494.0
(22) Date of filing: 16.09.2015
(51) Int. Cl.: H02J 7/00

(54) **METHOD AND DEVICE FOR CHARGE MANAGEMENT**
VERFAHREN UND VORRICHTUNG ZUR LADUNGSVERWALTUNG
PROCÉDÉ ET DISPOSITIF DE GESTION DE CHARGE

(30) Priority: 16.12.2014 CN 201410784711
(43) Date of publication of application: 22.06.2016
(73) Proprietor: Xiaomi Inc., Beijing 100085 (CN)
(72) Inventor: ZHANG, Xiaoqin, Beijing 100085 (CN); DU, Hui, Beijing 100085 (CN); GU, Linghua, Beijing 100085 (CN)
(74) Representative: Cabinet Beau de Loménie

(56) References cited:
- EP-A2- 1 589 631
- CN-A- 103 199 582
- US-A1- 2007 287 509

## Description

### TECHNICAL FIELD

The present disclosure generally relates to the field of electronic circuits, and more particularly, to a method and a device for charge management.

### BACKGROUND

Along with the improvements in computing capability of chips, power consumption and heat generation of the chips are also improving. How to reduce the power consumption and heat generation in mobile devices such as smart phones, tablets, e-book readers and the like becomes an important subject.

In a mobile terminal, there are two major heat generating chip sources. Among them, a first chip source includes: a CPU (Central Processing Unit), a GPU (Graphic Processing Unit) and a memory; the second chip source includes: a power management chip and a charge management chip. When a user is using a mobile terminal normally, the heat is generated mainly from the first chip source; when the mobile terminal is charged, the heat is generated mainly from the second chip source; and when the user is using the mobile terminal during the charging process, both of the two chip sources will generate a significant amount of heat. Document EP 1 589 631 discloses a known method for charge management. Document CN 103 199 582 discloses a known method in which a charging current is adjusted.

### SUMMARY

In order to solve the problem in the related art that a mobile terminal will generate too much heat during the charging process, the present disclosure provides a method and a device for charge management. The technical solutions are as follows.

According to a first aspect of the present disclosure, there is provided a method for charge management of a mobile terminal in accordance with claim 1.

In an embodiment, calculating of a consumed current value according to the target charging current value and the actual charging current value, includes:
calculating a difference value between the target charging current value and the actual charging current value which are collected at the same sampling time instance; and
calculating an average value of at least one of the difference value within a preset time period, as the consumed current value, the preset time period comprising at least one sampling time instance.

According to a second aspect of the present disclosure, there is provided a device for charge management of a mobile terminal in accordance with claim 3.

In an embodiment, the calculating module includes:
a difference-value calculating sub-module configured to calculate a difference value between the target charging current value and the actual charging current value which are collected at the same sampling time instance; and
an average-value calculating sub-module configured to calculate an average value of at least one of the difference value within a preset time period as the consumed current value, the preset time period comprising at least one sampling time instance.

According to a third aspect of embodiments of the present disclosure, there is provided a computer program, which when executed on a processor of a device, performs the above method according to the first aspect.

This program can use any programming language and take the form of source code, object code or a code intermediate between source code and object code, such as a partially compiled form, or any other desirable form.

According to a fourth aspect of embodiments of the present disclosure, there is provided a recording medium readable by a computer and having recorded thereon a computer program including instructions for executing the steps of a method as defined above.

The recording medium can be any entity or device capable of storing the program. For example, the recording medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

The advantageous effects brought by the technical solutions according to the embodiments of the present disclosure may include:
During a charging process, a target charging current value and an actual charging current value are acquired; a consumed current value is calculated according to the target charging current value and the actual charging current value; and the target charging current value is adjusted according to the magnitude of the consumed current value. Thus, the present disclosure solves the problem that a mobile terminal will generate too much heat during the charging process, and achieves the effects that the target charging current value may be dynamically adjusted according to the magnitude of the consumed current value, and that the heat generated by the mobile terminal changes according to the magnitude of the consumed current value.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig.1 is a flow chart of a method for charge management according to an exemplary embodiment;
Fig.2 is a flow chart of a method for charge management according to another exemplary embodiment;
Fig.3 is a flow chart of a method for charge management according to another exemplary embodiment;
Fig.4 is a block diagram of a device for charge management according to an exemplary embodiment;
Fig.5 is a block diagram of a device for charge management according to another exemplary embodiment; and
Fig.6 is a block diagram of a device for charge management according to an exemplary embodiment.

Through the above accompany drawings, the specific embodiments of the present disclosure have been shown, for which a more detailed description will be given as below. These drawings and textual description are not intended to limit the scope of the concept of the present disclosure in any manner, but to explain the concept of the present disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

In the embodiments of the present disclosure, a mobile terminal refers to an electronic device powered by a rechargeable battery. The mobile terminal may be a mobile phone, a tablet computer, an e-book reader, an MP3 (Moving Picture Experts Group Audio Layer III) player, an MP4 (Moving Picture Experts Group Audio Layer IV) player, a laptop portable computer, or the like.

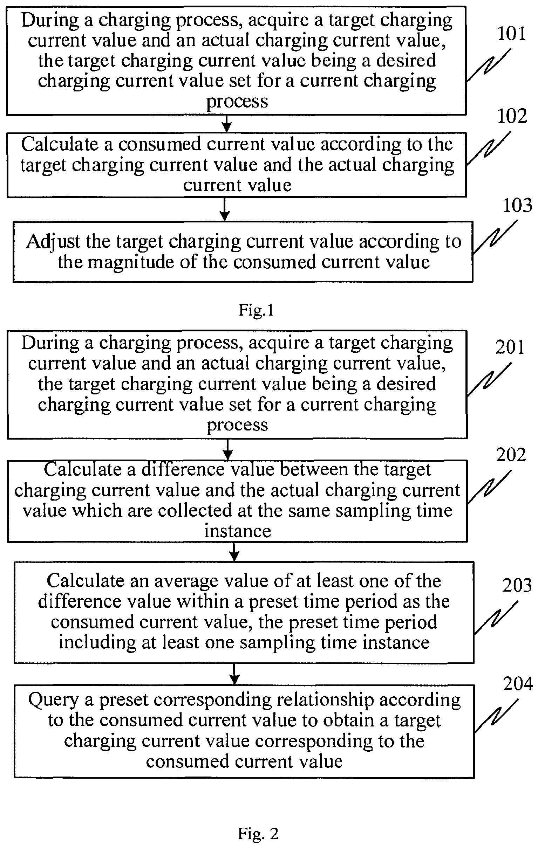

Fig.1 is a flow chart of a method for charge management according to an exemplary embodiment. In the present embodiment, the method for charge management is for example applied in a mobile terminal. The method for charge management may include the following steps.

In step 101, during a charging process, a target charging current value and an actual charging current value are acquired. The target charging current value is a desired charging current value set for a current charging process.

The target charging current value is a desired charging current value set by the mobile terminal for a current charging process, and may be denoted by Itarget.

The actual charging current value is a current value measured from the rechargeable battery, and may be denoted by Iactual. The actual charging current value is generally smaller than the target charging current value.

In step 102, a consumed current value is calculated according to the target charging current value and the actual charging current value.

Optionally, the consumed current value Iconsumed = the target charging current value Itarget - the actual charging current value Iactual. The consumed current Iconsumed mainly includes the current consumed by the first chip source, i.e., the current consumed by the CPU, GPU and the memory.

A smaller consumed current value Iconsumed means a smaller present load of the mobile terminal, and indicates that the user may not be using the mobile terminal.

A larger consumed current value Iconsumed means a larger present load of the mobile terminal, and indicates that the user may be using the mobile terminal.

In step 103, the target charging current value is adjusted according to the magnitude of the consumed current value.

The magnitude of the consumed current value may have a negative correlation with the target charging current value resulted from the adjustment. That is,
if the consumed current value Iconsumed is relatively small, the user may not be using the mobile terminal, and a relatively large target charging current value Itarget may be employed in order to guarantee the charging speed.

If the consumed current value Iconsumed is relatively large, the user may be using the mobile terminal, and a relatively small target charging current value Itarget may be employed in order to reduce the heat generation.

Accordingly, in the method for charge management provided by the present embodiment, during a charging process, a target charging current value and an actual charging current value are acquired; a consumed current value is calculated according to the target charging current value and the actual charging current value; and the target charging current value is adjusted according to the magnitude of the consumed current value. Thus, the method solves the problem that a mobile terminal will generate too much heat during the charging process, and achieves the effects that the target charging current value may be dynamically adjusted according to the magnitude of the consumed current value, and that the heat generated by the mobile terminal changes according to the magnitude of the consumed current value.

Fig.2 is a flow chart of a method for charge management according to another exemplary embodiment. In the present embodiment, the method for charge management is for example applied in a mobile terminal. The method for charge management may include the following steps.

In step 201, during a charging process, a target charging current value and an actual charging current value are acquired. The target charging current value is a desired charging current value set for a current charging process.

During the charging process, the mobile terminal samples the target charging current value Itarget and the actual charging current value Iactual once every preset sampling interval. The target charging current value is a desired charging current value set by the mobile terminal for a current charging process. The actual charging current value is a current value measured from the rechargeable battery by the mobile terminal.

For example, the mobile terminal samples the target charging current value Itarget and the actual charging current value Iactual once every 30 seconds.
Table 1 shows an exemplary sampling result.

**Table 1**

| sampling time instance | target charging current value | actual charging current value |
|---|---|---|
| sampling time instance 1 | current value 11 | current value 12 |
| sampling time instance 2 | current value 21 | current value 22 |
| sampling time instance 3 | current value 31 | current value 32 |
| sampling time instance 4 | current value 41 | current value 42 |

In step 202, a difference value between the target charging current value and the actual charging current value which are collected at the same sampling time instance is calculated.

The mobile terminal calculates the difference value between the target charging current value and the actual charging current value which are collected at the same sampling time instance.
Table 2 shows an exemplary calculating process.

**Table 2**

| sampling time instance | target charging current value | actual charging current value | difference value |
|---|---|---|---|
| sampling time instance 1 | current value 11 | current value 12 | current value 11- current value 12= current value 13 |
| sampling time instance 2 | current value 21 | current value 22 | current value 21- current value 22= current value 23 |
| sampling time instance 3 | current value 31 | current value 32 | current value 31- current value 32= current value 33 |
| sampling time instance 4 | current value 41 | current value 42 | current value 41- current value 42= current value 43 |

In step 203, an average value of at least one of the difference value within a preset time period is calculated as the consumed current value, and the preset time period includes at least one sampling time instance.

The preset time period may be a time period determined based on a preset time interval.

For example, consecutive preset time periods may be determined on the basis that the preset time interval is 2 minutes, and each preset time period includes four sampling time instances.

For each preset time period, the mobile terminal calculates an average value of at least one of the difference value within a preset time period as the consumed current value. For example, the mobile terminal calculates the average value of the current value 13, the current value 23, the current value 33 and the current value 43 as the consumed current value Iconsumed.

In step 204, a preset corresponding relationship is queried according to the consumed current value to obtain a target charging current value corresponding to the consumed current value.

The corresponding relationship includes at least one range of consumed current values and at least one target charging current value corresponding to the at least one range of consumed current values, respectively. In the corresponding relationship, the at least one range of consumed current values has a negative correlation with the at least one target charging current value.

Table 3 shows an exemplary corresponding relationship, in which a first threshold value is smaller than a second threshold value, the second threshold is smaller than a third threshold, and the third threshold is smaller than a fourth threshold.

**Table 3**

| ranges of consumed current values | target charging current values |
|---|---|
| the consumed current value is within (0, the first threshold) | maximum charging current value ^{∗}100% |
| the consumed current value is within (the second threshold, the third threshold) | maximum charging current value ^{∗}80% |
| the consumed current value is within (the third threshold, the fourth threshold) | maximum charging current value ^{∗}70% |
| the consumed current value is within (the fourth threshold, a maximum value) | consumed current value |

For example, when the consumed current value is smaller than the first threshold, the mobile terminal may adjust the target charging current value to the maximum charging current value, and then continue the charging according to the adjusted target charging current value.

For example, when the consumed current value is larger than the third threshold but smaller than the fourth threshold, the mobile terminal may adjust the target charging current value to the maximum charging current value^{∗}70%, and then continue the charging according to the adjusted target charging current value.

Accordingly, in the method for charge management provided by the present embodiment, during a charging process, a target charging current value and an actual charging current value are acquired; a consumed current value is calculated according to the target charging current value and the actual charging current value; and the target charging current value is adjusted according to the magnitude of the consumed current value. Thus, the method solves the problem that a mobile terminal will generate too much heat during the charging process, and achieves the effects that the target charging current value may be dynamically adjusted according to the magnitude of the consumed current value, and that the heat generated by the mobile terminal changes according to the magnitude of the consumed current value.

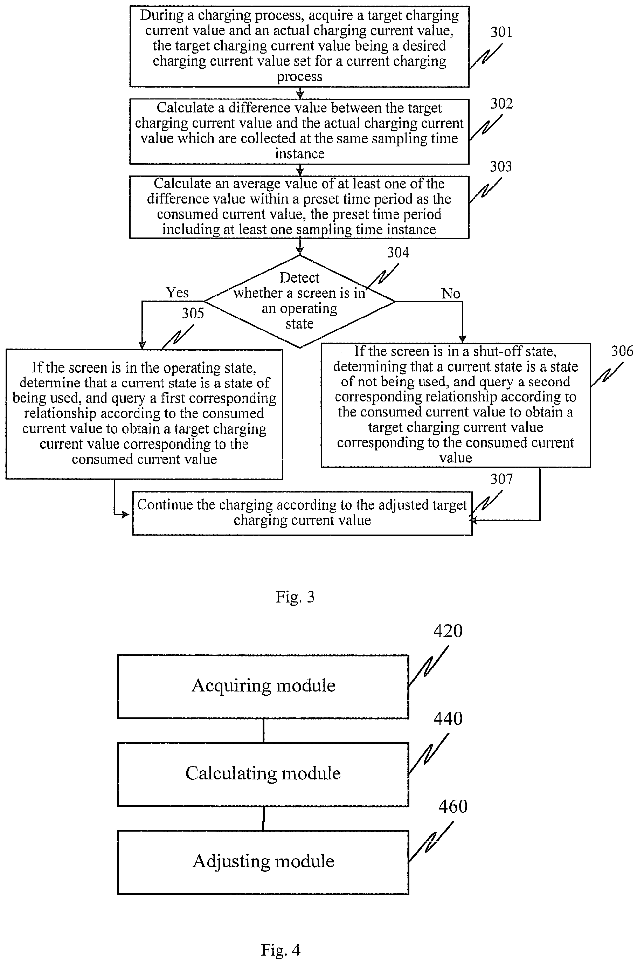

Fig. 3 is a flow chart of a method for charge management according to another exemplary embodiment. In the present embodiment, the method for charge management is for example applied in a mobile terminal. The method for charge management may include the following steps.

In step 301, during a charging process, a target charging current value and an actual charging current value are acquired. The target charging current value is a desired charging current value set for a current charging process.

During the charging process, the mobile terminal samples the target charging current value Itarget and the actual charging current value Iactual once every preset sampling interval. The target charging current value is a desired charging current value set by the mobile terminal for a current charging process. The actual charging current value is a current value measured from the rechargeable battery by the mobile terminal.

For example, the mobile terminal samples the target charging current value Itarget and the actual charging current value Iactual once every 30 seconds.

In step 302, a difference value between the target charging current value and the actual charging current value which are collected at the same sampling time instance is calculated.

The mobile terminal calculates the difference value between the target charging current value Itarget and the actual charging current value Iactual which are collected at the same sampling time instance.

In step 303, an average value of at least one of the difference value within a preset time period is calculated as the consumed current value, and the preset time period includes at least one sampling time instance.

The preset time period may be a time period determined based on a preset time interval.

For example, consecutive preset time periods may be determined on the basis that the preset time interval is 2 minutes, and each preset time period includes four sampling time instances.

For each preset time period, the mobile terminal calculates an average value of at least one of the difference value within a preset time period as the consumed current value Iconsumed.

In step 304, whether a screen is in an operating state is detected.

The mobile terminal may also judge whether the mobile terminal is currently in the state of being used by detecting whether the screen is in the operating state. The state of being used may refer to a state where a user is using the mobile terminal, for example, to watch video or play games, and so on.

If the screen is in the operating state, step 305 is performed; and if the screen is in a shut-off state, step 306 is performed.

Meanwhile, the mobile terminal may pre-store two sets of corresponding relationships, i.e., a first corresponding relationship and a second corresponding relationship. Each corresponding relationship includes at least one range of consumed current values and at least one target charging current value corresponding to the at least one range of consumed current values, respectively.

In a state of being used by the user, the mobile terminal determines the target charging current value through the first corresponding relationship, so as to take both the heat generation and charging speed into consideration. In a state of not being used by the user, the mobile terminal determines the target charging current value through the second corresponding relationship, so as to give priority to the charging speed. Thus, a target charging current value corresponding to a consumed current value in the first corresponding relationship is smaller than or equal to a target charging current value corresponding to the same consumed current value in the second corresponding relationship.

In step 305, if the screen is in the operating state, it is determined that a current state is a state of being used, and the first corresponding relationship is queried according to the consumed current value to obtain a target charging current value corresponding to the consumed current value.

Table 4 shows an exemplary first corresponding relationship. In the first corresponding relationship, the ranges of consumed current values have a negative correlation with the target charging current values.

**Table 4**

| ranges of consumed current values | target charging current values |
|---|---|
| the consumed current value is within (0, 400mA) | maximum charging current value ^{∗}100% |
| the consumed current value is within [400mA, 700mA) | maximum charging current value ^{∗}80% |
| the consumed current value is within [700mA, 1100mA) | maximum charging current value ^{∗}70% |
| the consumed current value is within [1100mA, a maximum value) | consumed current value |

For example, if the consumed current value is 500mA, the mobile terminal adjusts the target charging current value to the maximum charging current value ^{∗}80%.

In step 306, if the screen is in a shut-off state, it is determined that a current state is a state of not being used, and the second corresponding relationship is queried according to the consumed current value to obtain a target charging current value corresponding to the consumed current value.

Table 5 shows an exemplary second corresponding relationship. In the second corresponding relationship, the range of consumed current values has a negative correlation with the target charging current value.

**Table 5**

| ranges of consumed current values | target charging current values |
|---|---|
| the consumed current value is within (0, 1000mA) | maximum charging current value ^{∗}100% |
| the consumed current value is within [1000mA, 1500mA) | maximum charging current value ^{∗}90% |
| the consumed current value is within [1500mA, maximum value) | consumed current value |

For example, if the consumed current value is 1100mA, the mobile terminal adjusts the target charging current value to the maximum charging current value ^{∗}90%.

In step 307, the charging is continued according to the adjusted target charging current value.

Accordingly, in the method for charge management provided by the present embodiment, during a charging process, a target charging current value and an actual charging current value are acquired; a consumed current value is calculated according to the target charging current value and the actual charging current value; and the target charging current value is adjusted according to the magnitude of the consumed current value. Thus, the method solves the problem that a mobile terminal will generate too much heat during the charging process, and achieves the effects that the target charging current value may be dynamically adjusted according to the magnitude of the consumed current value, and that the heat generated by the mobile terminal changes according to the magnitude of the consumed current value.

In addition, in the method for charge management provided by the present embodiment, when the mobile terminal is in a state of being used by the user, the mobile terminal determines the target charging current value through the first corresponding relationship, so as to take both the heat generation and charging speed into consideration.

Further, in the method for charge management provided by the present embodiment, when the mobile terminal is in a state of not being used by the user, the mobile terminal determines the target charging current value through the second corresponding relationship, so as to give priority to the charging speed.

The following are device embodiments of the present disclosure, which may be configured to perform the method embodiments of the present disclosure. For details not disclosed in the device embodiments of the present disclosure, reference may be made to the method embodiments of the present disclosure.

Fig.4 is a block diagram of a device for charge management according to an exemplary embodiment. The device for charge management may be implemented by software, hardware or a combination of the both into a part of or whole of a mobile terminal. The device for charge management may include:
an acquiring module 420 configured to, during a charging process, acquire a target charging current value and an actual charging current value, the target charging current value being a desired charging current value set for a current charging process;
a calculating module 440 configured to calculate a consumed current value according to the target charging current value and the actual charging current value; and
an adjusting module 460 configured to adjust the target charging current value according to the consumed current value.

Accordingly, in the device for charge management provided by the present embodiment, during a charging process, a target charging current value and an actual charging current value are acquired; a consumed current value is calculated according to the target charging current value and the actual charging current value; and the target charging current value is adjusted according to the magnitude of the consumed current value. Thus, the device solves the problem that a mobile terminal will generate too much heat during the charging process, and achieves the effects that the target charging current value may be dynamically adjusted according to the magnitude of the consumed current value, and that the heat generated by the mobile terminal changes according to the magnitude of the consumed current value.

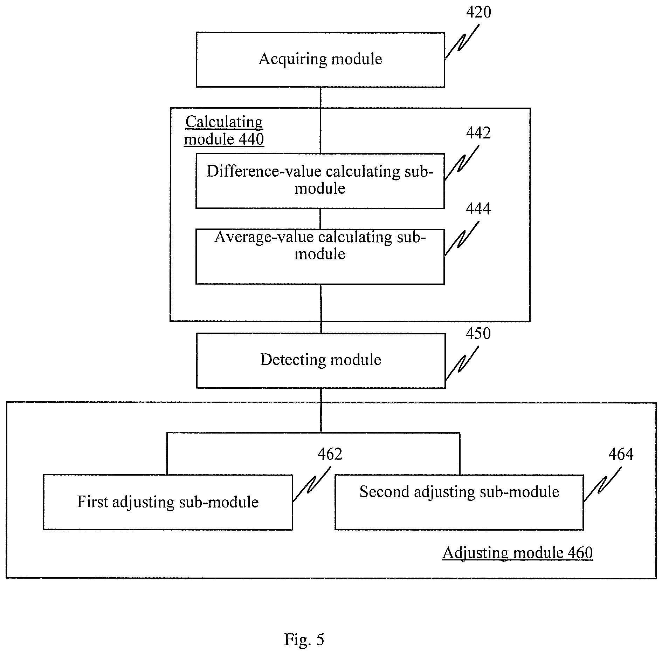

Fig.5 is a block diagram of a device for charge management according to an exemplary embodiment. The device for charge management may be implemented by software, hardware or a combination of the both into a part of or whole of a mobile terminal. The device for charge management may include:
an acquiring module 420 configured to, during a charging process, acquire a target charging current value and an actual charging current value, the target charging current value being a desired charging current value set for a current charging process;
a calculating module 440 configured to calculate a consumed current value according to the target charging current value and the actual charging current value; and
an adjusting module 460 configured to adjust the target charging current value according to the consumed current value.

Optionally, the adjusting module 460 is configured to query a preset corresponding relationship according to the consumed current value to obtain a target charging current value corresponding to the consumed current value, the corresponding relationship comprising at least one range of consumed current values and at least one target charging current value corresponding to the at least one range of consumed current values, respectively.

Optionally, the adjusting module 460 includes: a first adjusting sub-module 462 and a second adjusting sub-module 464.

The first adjusting sub-module 462 is configured to, when the mobile terminal detects that itself is in a state of being used, query a first corresponding relationship according to the consumed current value to obtain a target charging current value corresponding to the consumed current value, the first corresponding relationship including at least one range of consumed current values and at least one target charging current value corresponding to the at least one range of consumed current values, respectively; and
the second adjusting sub-module 464 is configured to, when the mobile terminal detects that itself is in a state of not being used, query a second corresponding relationship according to the consumed current value to obtain a target charging current value corresponding to the consumed current value, the second corresponding relationship including at least one range of consumed current values and at least one target charging current value corresponding to the at least one range of consumed current values, respectively;
wherein a target charging current value corresponding to a consumed current value in the first corresponding relationship is smaller than or equal to a target charging current value corresponding to the same consumed current value in the second corresponding relationship.

Optionally, the device further includes:
a detecting module 450 configured to detect whether a screen is in an operating state;
wherein the first adjusting sub-module 462 is configured to, if the detecting module detects that the screen is in the operating state, determine that a current state of the mobile terminal is a state of being used, and query the first corresponding relationship according to the consumed current value to obtain a target charging current value corresponding to the consumed current value; and
wherein the second adjusting sub-module 464 is configured to, if the detecting module detects that the screen is in a shut-off state, determine that a current state of the mobile terminal is a state of not being used, and query the second corresponding relationship according to the consumed current value to obtain a target charging current value corresponding to the consumed current value.

Optionally, the calculating module 440 includes:
a difference-value calculating sub-module 442 configured to calculate a difference value between the target charging current value and the actual charging current value which are collected at the same sampling time instance; and
an average-value calculating sub-module 444 configured to calculate an average value of at least one of the difference value within a preset time period as the consumed current value, the preset time period including at least one sampling time instance.

Accordingly, in the device for charge management provided by the present embodiment, during a charging process, a target charging current value and an actual charging current value are acquired; a consumed current value is calculated according to the target charging current value and the actual charging current value; and the target charging current value is adjusted according to the magnitude of the consumed current value. Thus, the device solves the problem that a mobile terminal will generate too much heat during the charging process, and achieves the effects that the target charging current value may be dynamically adjusted according to the magnitude of the consumed current value, and that the heat generated by the mobile terminal changes according to the magnitude of the consumed current value.

In addition, in the device for charge management provided by the present embodiment, when in a state of being used by the user, the mobile terminal determines the target charging current value through the first corresponding relationship, so as to take both the heat generation and charging speed into consideration.

Further, in the device for charge management provided by the present embodiment, when in a state of not being used by the user, the mobile terminal determines the target charging current value through the second corresponding relationship, so as to give priority to the charging speed.

With respect to the device in the above embodiments, specific operations performed by each module have been described in detail in the related method embodiments, and detailed description thereof are omitted herein.

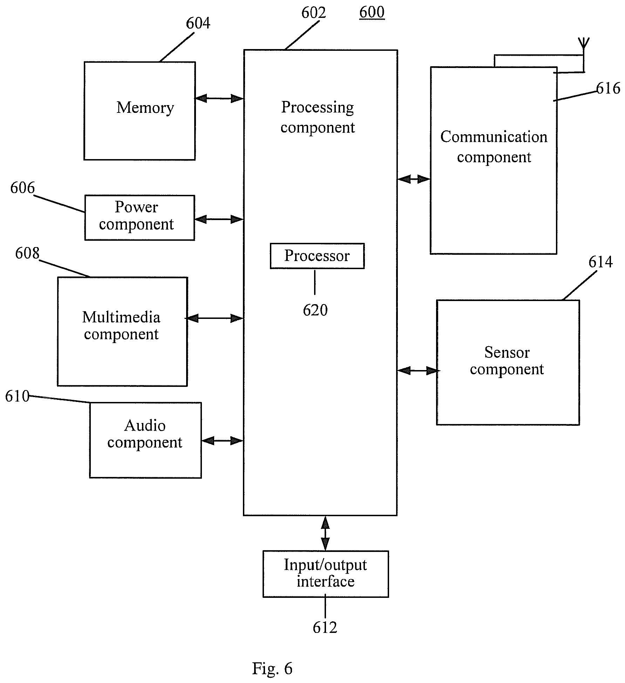

Fig.6 is a block diagram of a mobile terminal 600 for charge management according to an exemplary embodiment. For example, the terminal 600 may be a mobile phone, a computer, a digital broadcast terminal, a messaging device, a gaming console, a tablet, a medical device, exercise equipment, a personal digital assistant, and the like.

Referring to Fig. 6, the terminal 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the terminal 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the terminal 600. Examples of such data include instructions for any applications or methods operated on the terminal 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the terminal 600. The power component 606 may include a power management system, one or more power sources, and any other components associated with the generation, management, and distribution of power in the terminal 600.

The multimedia component 608 includes a screen providing an output interface between the terminal 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the terminal 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the terminal 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the terminal 600. For instance, the sensor component 614 may detect an open/closed status of the terminal 600, relative positioning of components, e.g., the display and the keypad, of the terminal 600, a change in position of the terminal 600 or a component of the terminal 600, a presence or absence of user contact with the terminal 600, an orientation or an acceleration/deceleration of the terminal 600, and a change in temperature of the terminal 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the terminal 600 and other devices. The terminal 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method for charge management.

In exemplary embodiments, there is also provided a non-transitory computer-readable storage medium including instructions, such as included in the memory 604, executable by the processor 620 in the terminal 600, for performing the above-described methods. For example, the non-transitory computer-readable storage medium may be a ROM, a RAM, a CD-ROM, a magnetic tape, a floppy disc, an optical data storage device, and the like.

An non-transitory computer-readable storage medium, when instructions in the storage medium are executed by a processor of the terminal 600, the terminal 600 is enabled to perform the method for charge management.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for charge management of a mobile terminal, comprising:
during a charging process, acquiring (101) a target charging current value and an actual charging current value, the target charging current value being a desired total current value set for a current charging process and the actual charging current value being a current value measured from the rechargeable battery;
calculating (102) a consumed current value according to the difference between the target charging current value and the actual charging current value; and
adjusting (103) the target charging current value according to the magnitude of the consumed current value,
wherein adjusting (103) of the target charging current value according to the magnitude of the consumed current value, comprises:
if the mobile terminal detects that itself is in a state of being used, querying a first corresponding relationship according to the consumed current value to obtain a target charging current value corresponding to the consumed current value, the first corresponding relationship comprising at least one range of consumed current values and at least one target charging current value corresponding to the at least one range of consumed current values, respectively; and
if the mobile terminal detects that itself is in a state of not being used, querying a second corresponding relationship according to the consumed current value to obtain a target charging current value corresponding to the consumed current value, the second corresponding relationship comprising at least one range of consumed current values and at least one target charging current value corresponding to the at least one range of consumed current values, respectively;
wherein a target charging current value corresponding to a consumed current value in the first corresponding relationship is smaller than or equal to a target charging current value corresponding to the same consumed current value in the second corresponding relationship,
**characterized in that**, the mobile terminal comprises a screen the method further comprises:
detecting (304) whether the screen is in an operating state;
if the screen is in the operating state, determining (305) that a current state of the mobile terminal is the state of being used, and performing the step of querying the first corresponding relationship according to the consumed current value to obtain a target charging current value corresponding to the consumed current value; and
if the screen is in a shut-off state, determining (306) that a current state of the mobile terminal is the state of not being used, and performing the step of querying the second corresponding relationship according to the consumed current value to obtain a target charging current value corresponding to the consumed current value.

2. The method according to claim 1, **characterized in that**, calculating of a consumed current value according to the target charging current value and the actual charging current value, comprises:
calculating (202, 302) a difference value between the target charging current value and the actual charging current value which are collected at the same sampling time instance; and
calculating (203, 303) an average value of at least one of the difference value within a preset time period as the consumed current value, the preset time period comprising at least one sampling time instance.

3. A device for charge management of a mobile terminal, the device being implemented in the terminal, comprising:
an acquiring module (420) configured to, during a charging process, acquire a target charging current value and an actual charging current value, the target charging current value being a desired total current value set for a current charging process and the actual charging current value being a current value measured from the rechargeable battery;
a calculating module (440) configured to calculate a consumed current value according to the difference between the target charging current value and the actual charging current value; and
an adjusting module (460) configured to adjust the target charging current value according to the magnitude of the consumed current value,
wherein the adjusting module (460) comprises: a first adjusting sub-module (462) and a second adjusting sub-module (464);
the first adjusting sub-module (462) is configured to, when the mobile terminal detects that itself is in a state of being used, query a first corresponding relationship according to the consumed current value to obtain a target charging current value corresponding to the consumed current value, the first corresponding relationship comprising at least one range of consumed current values and at least one target charging current value corresponding to the at least one range of consumed current values, respectively; and
the second adjusting sub-module (464) is configured to, when the mobile terminal detects that itself is in a state of not being used, query a second corresponding relationship according to the consumed current value to obtain a target charging current value corresponding to the consumed current value, the second corresponding relationship comprising at least one range of consumed current values and at least one target charging current value corresponding to the at least one range of consumed current values, respectively;
wherein a target charging current value corresponding to a consumed current value in the first corresponding relationship is smaller than or equal to a target charging current value corresponding to the same consumed current value in the second corresponding relationship,
**characterized in that**, the mobile terminal comprises a screen and the device further comprises:
a detecting module (450) configured to detect whether the screen is in an operating state;
the first adjusting sub-module (462) is configured to, if the detecting module detects that the screen is in the operating state, determine that a current state of the mobile terminal is a state of being used, and query the first corresponding relationship according to the consumed current value to obtain a target charging current value corresponding to the consumed current value; and
the second adjusting sub-module (464) is configured to, if the detecting module detects that the screen is in a shut-off state, determine that a current state of the mobile terminal is a state of not being used, and query the second corresponding relationship according to the consumed current value to obtain a target charging current value corresponding to the consumed current value.

4. The device according to claim 3, **characterized in that**, the calculating module comprises:
a difference-value calculating sub-module (442) configured to calculate a difference value between the target charging current value and the actual charging current value which are collected at the same sampling time instance; and
an average-value calculating sub-module (444) configured to calculate an average value of at least one of the difference value within a preset time period as the consumed current value, the preset time period comprising at least one sampling time instance.

5. A computer program, which when executed on a processor of a device, performs a method according to any one of claims 1 or 2.

6. A recording medium readable by a computer and having recorded thereon a computer program including instructions for executing the steps of a method according to any one of claims 1 or 2.

## Patentansprüche

1. Verfahren zum Lademanagement eines mobilen Endgeräts, umfassend:
Erfassen (101) eines Soll-Ladestromwerts und eines Ist-Ladestromwerts während eines Ladevorgangs, wobei der Soll-Ladestromwert ein für einen aktuellen Ladevorgang eingestellter gewünschter Gesamtstromwert ist und der Ist-Ladestromwert ein bei einer wiederaufladbaren Batterie gemessener Stromwert ist,
Berechnen (102) eines verbrauchten Stromwertes entsprechend der Differenz zwischen dem Soll-Ladestromwert und dem Ist-Ladestromwert und
Einstellen (103) des Soll-Ladestromwertes entsprechend der Größe des verbrauchten Stromwertes,
wobei das Einstellen (103) des Soll-Ladestromwertes entsprechend der Größe des verbrauchten Stromwertes umfasst:
wenn das mobile Endgerät feststellt, dass es sich in einem Zustand der Benutzung befindet, Abfragen einer ersten entsprechenden Beziehung gemäß dem verbrauchten Stromwert, um einen Soll-Ladestromwert zu erhalten, der dem verbrauchten Stromwert entspricht, wobei die erste entsprechende Beziehung mindestens einen Bereich von verbrauchten Stromwerten und bzw. mindestens einen Soll-Ladestromwert umfasst, der dem mindestens einen Bereich von verbrauchten Stromwerten entspricht, und
wenn das mobile Endgerät feststellt, dass es sich in einem Zustand der Nichtbenutzung befindet, Abfragen einer zweiten entsprechenden Beziehung gemäß dem verbrauchten Stromwert, um einen Soll-Ladestromwert zu erhalten, der dem verbrauchten Stromwert entspricht, wobei die zweite entsprechende Beziehung mindestens einen Bereich von verbrauchten Stromwerten bzw. mindestens einen Soll-Ladestromwert umfasst, der dem mindestens einen Bereich von verbrauchten Stromwerten entspricht,
wobei ein Soll-Ladestromwert, der einem verbrauchten Stromwert in der ersten entsprechenden Beziehung entspricht, kleiner oder gleich einem Soll-Ladestromwert ist, der demselben verbrauchten Stromwert in der zweiten entsprechenden Beziehung entspricht,
**dadurch gekennzeichnet, dass** das mobile Endgerät einen Bildschirm umfasst, wobei das Verfahren ferner umfasst:
Feststellen (304), ob sich der Bildschirm in einem Betriebszustand befindet,
wenn sich der Bildschirm in einem Betriebszustand befindet, Feststellen (305), dass ein aktueller Zustand des mobilen Endgeräts der Zustand der Benutzung ist, und Ausführen des Schritts des Abfragens der ersten entsprechenden Beziehung gemäß dem verbrauchten Stromwert, um einen Soll-Ladestromwert zu erhalten, der dem verbrauchten Stromwert entspricht, und
wenn sich der Bildschirm in einem ausgeschalteten Zustand befindet, Feststellen (306), dass ein aktueller Zustand des mobilen Endgeräts der Zustand der Nichtbenutzung ist, und Ausführen des Schritts des Abfragens der zweiten entsprechenden Beziehung gemäß dem verbrauchten Stromwert, um einen Soll-Ladestromwert zu erhalten, der dem verbrauchten Stromwert entspricht.

2. Verfahren nach Anspruch 1, **dadurch gekennzeichnet, dass** das Berechnen eines verbrauchten Stromwerts gemäß dem Soll-Ladestromwert und dem Ist-Ladestromwert umfasst:
Berechnen (202, 302) eines Differenzwertes zwischen dem Soll-Ladestromwert und dem Ist-Ladestromwert, die zu demselben Abtastzeitpunkt erfasst wurden, und
Berechnen (203, 303) eines Durchschnittswertes von mindestens einem der Differenzwerte innerhalb einer voreingestellten Zeitspanne als den verbrauchten Stromwert, wobei die voreingestellte Zeitspanne mindestens eine Abtastzeitinstanz umfasst.

3. Vorrichtung zum Lademanagement eines mobilen Endgeräts, wobei die Vorrichtung in das Endgerät implementiert ist, umfassend:
ein Erfassungsmodul (420), das dazu konfiguriert ist, während eines Ladevorgangs einen Soll-Ladestromwert und einen Ist-Ladestromwert zu erfassen, wobei der Soll-Ladestromwert ein gewünschter Gesamtstromwert ist, der für einen aktuellen Ladevorgang eingestellt ist, und der Ist-Ladestromwert ein bei einer wiederaufladbaren Batterie gemessener Stromwert ist,
ein Berechnungsmodul (440), das dazu konfiguriert ist, einen verbrauchten Stromwert entsprechend der Differenz zwischen dem Soll-Ladestromwert und dem Ist-Ladestromwert zu berechnen, und
ein Einstellmodul (460), das dazu konfiguriert ist, den Soll-Ladestromwert entsprechend der Größe des verbrauchten Stromwertes einzustellen,
wobei das Einstellmodul (460) umfasst: ein erstes Einstelluntermodul (462) und ein zweites Einstelluntermodul (464),
das erste Einstelluntermodul (462) dazu konfiguriert ist, wenn das mobile Endgerät feststellt, dass es sich in einem Benutzungszustand befindet, eine erste entsprechende Beziehung gemäß dem verbrauchten Stromwert abzufragen, um einen Soll-Ladestromwert zu erhalten, der dem verbrauchten Stromwert entspricht, wobei die erste entsprechende Beziehung mindestens einen Bereich von verbrauchten Stromwerten bzw. mindestens einen Soll-Ladestromwert umfasst, der dem mindestens einen Bereich von verbrauchten Stromwerten entspricht, und
das zweite Einstelluntermodul (464) dazu konfiguriert ist, wenn das mobile Endgerät feststellt, dass es sich in einem Zustand der Nichtbenutzung befindet, eine zweite entsprechende Beziehung gemäß dem verbrauchten Stromwert abzufragen, um einen Soll-Ladestromwert zu erhalten, der dem verbrauchten Stromwert entspricht, wobei die zweite entsprechende Beziehung mindestens einen Bereich von verbrauchten Stromwerten bzw. mindestens einen Soll-Ladestromwert umfasst, der dem mindestens einen Bereich von verbrauchten Stromwerten entspricht,
wobei ein Soll-Ladestromwert, der einem verbrauchten Stromwert in der ersten entsprechenden Beziehung entspricht, kleiner oder gleich einem Soll-Ladestromwert ist, der demselben verbrauchten Stromwert in der zweiten entsprechenden Beziehung entspricht,
**dadurch gekennzeichnet, dass** das mobile Endgerät einen Bildschirm umfasst und das Gerät ferner umfasst:
ein Feststellungsmodul (450), das dazu konfiguriert ist, festzustellen, ob sich der Bildschirm in einem Betriebszustand befindet,
das erste Einstelluntermodul (462) dazu konfiguriert ist, wenn das Feststellungsmodul feststellt, dass sich der Bildschirm in einem Betriebszustand befindet, festzustellen, dass ein aktueller Zustand des mobilen Endgeräts ein Benutzungszustand ist, und die erste entsprechende Beziehung gemäß dem verbrauchten Stromwert abzufragen, um einen Soll-Ladestromwert zu erhalten, der dem verbrauchten Stromwert entspricht, und
das zweite Einstelluntermodul (464) dazu konfiguriert ist, wenn das Feststellungsmodul feststellt, dass sich der Bildschirm in einem ausgeschalteten Zustand befindet, festzustellen, dass ein aktueller Zustand des mobilen Endgeräts ein Zustand der Nichtbenutzung ist, und die zweite entsprechende Beziehung gemäß dem verbrauchten Stromwert abzufragen, um einen Soll-Ladestromwert zu erhalten, der dem verbrauchten Stromwert entspricht.

4. Vorrichtung nach Anspruch 3, **dadurch gekennzeichnet, dass** das Berechnungsmodul umfasst:
ein Differenzwert-Berechnungsuntermodul (442), das dazu konfiguriert ist, einen Differenzwert zwischen dem Soll-Ladestromwert und dem Ist-Ladestromwert, die zum gleichen Abtastzeitpunkt erfasst wurden, zu berechnen, und
ein Mittelwert-Berechnungsuntermodul (444), das dazu konfiguriert ist, einen Mittelwert von mindestens einem der Differenzwerte innerhalb einer voreingestellten Zeitspanne als den verbrauchten Stromwert zu berechnen, wobei die voreingestellte Zeitspanne mindestens eine Abtastzeitinstanz umfasst.

5. Computerprogramm, das, wenn es auf einem Prozessor eines Geräts ausgeführt wird, ein Verfahren nach einem der Ansprüche 1 oder 2 durchführt.

6. Aufzeichnungsmedium, das von einem Computer lesbar ist und auf dem ein Computerprogramm aufgezeichnet ist, das Anweisungen zur Ausführung der Schritte eines Verfahrens nach einem der Ansprüche 1 oder 2 enthält.

## Revendications

1. Procédé de gestion de charge d'un terminal mobile, comprenant les étapes suivantes :
pendant un processus de charge, acquérir (101) une valeur de courant de charge cible et une valeur de courant de charge réelle, la valeur de courant de charge cible étant une valeur de courant totale souhaitée fixée pour un processus de charge de courant, et la valeur de courant de charge réelle étant une valeur de courant mesurée à partir de la batterie rechargeable ;
calculer (102) une valeur de courant consommé selon la différence entre la valeur de courant de charge cible et la valeur de courant de charge réelle ; et
régler (103) la valeur de courant de charge cible selon l'amplitude de la valeur de courant consommé,
dans lequel le réglage (103) de la valeur de courant de charge cible selon l'amplitude de la valeur de courant consommé, comprend :
si le terminal mobile détecte qu'il est lui-même dans un état d'utilisation, l'interrogation d'une première relation de correspondance selon la valeur de courant consommé pour obtenir une valeur de courant de charge cible correspondant à la valeur de courant consommé, la première relation de correspondance comprenant au moins une plage de valeurs de courant consommé et au moins une valeur de courant de charge cible correspondant à l'au moins une plage de valeurs de courant consommé, respectivement ; et
si le terminal mobile détecte qu'il est lui-même dans un état de non-utilisation, l'interrogation d'une deuxième relation de correspondance selon la valeur de courant consommé pour obtenir une valeur de courant de charge cible correspondant à la valeur de courant consommé, la deuxième relation de correspondance comprenant au moins une plage de valeurs de courant consommé et au moins une valeur de courant de charge cible correspondant à l'au moins une plage de valeurs de courant consommé, respectivement ;
dans lequel une valeur de courant de charge cible correspondant à une valeur de courant consommé dans la première relation de correspondance est inférieure ou égale à une valeur de courant de charge cible correspondant à la même valeur de courant consommé dans la deuxième relation de correspondance,
**caractérisé en ce que** le terminal mobile comprend un écran, le procédé comprenant en outre les étapes suivantes :
détecter (304) si l'écran est dans un état de fonctionnement ;
si l'écran est dans l'état de fonctionnement, déterminer (305) qu'un état de courant du terminal mobile est l'état d'utilisation, et réaliser l'étape consistant à interroger la première relation de correspondance selon la valeur de courant consommé pour obtenir une valeur de courant de charge cible correspondant à la valeur de courant consommé ; et
si l'écran est dans un état fermé, déterminer (306) qu'un état de courant du terminal mobile est l'état de non utilisation, et réaliser l'étape consistant à interroger la deuxième relation de correspondance selon la valeur de courant consommé pour obtenir une valeur de courant de charge cible correspondant à la valeur de courant consommé.

2. Procédé selon la revendication 1, **caractérisé en ce que** le calcul d'une valeur de courant consommé selon la valeur de courant de charge cible et la valeur de courant de charge réelle comprend :
le calcul (202, 302) d'une valeur de différence entre la valeur de courant de charge cible et la valeur de courant de charge réelle qui sont collectées à la même instance de temps d'échantillonnage ; et
le calcul (203, 303) d'une valeur moyenne de l'au moins une des valeurs de différence dans une période de temps prédéfinie comme valeur de courant consommé, la période de temps prédéfinie comprenant au moins une instance de temps d'échantillonnage.

3. Dispositif de gestion de charge d'un terminal mobile, le dispositif étant mis en œuvre dans le terminal, comprenant :
un module d'acquisition (420) configuré pour, pendant un processus de charge, acquérir une valeur de courant de charge cible et une valeur de courant de charge réelle, la valeur de courant de charge cible étant une valeur de courant totale souhaitée définie pour un processus de charge de courant, et la valeur de courant de charge réelle étant une valeur de courant mesurée à partir de la batterie rechargeable ;
un module de calcul (440) configuré pour calculer une valeur de courant consommé selon la différence entre la valeur de courant de charge cible et la valeur de courant de charge réelle ; et
un module de réglage (460) configuré pour régler la valeur de courant de charge cible selon l'amplitude de la valeur de courant consommé, dans lequel le module de réglage (460) comprend :
un premier sous-module de réglage (462) et un deuxième sous-module de réglage (464) ;
le premier sous-module de réglage (462) est configuré pour, lorsque le terminal mobile détecte qu'il est lui-même dans un état d'utilisation, interroger une première relation de correspondance selon la valeur de courant consommé pour obtenir une valeur de courant de charge cible correspondant à la valeur de courant consommé, la première relation de correspondance comprenant au moins une plage de valeurs de courant consommé et au moins une valeur de courant de charge cible correspondant à l'au moins une plage de valeurs de courant consommé, respectivement ; et
le deuxième sous-module de réglage (464) est configuré pour, lorsque le terminal mobile détecte qu'il est lui-même dans un état de non-utilisation, interroger une deuxième relation de correspondance selon la valeur de courant consommé pour obtenir une valeur de courant de charge cible correspondant à la valeur de courant consommé, la deuxième relation de correspondance comprenant au moins une plage de valeurs de courant consommé et au moins une valeur de courant de charge cible correspondant à l'au moins une plage de valeurs de courant consommé, respectivement ;
dans lequel une valeur de courant de charge cible correspondant à une valeur de courant consommé dans la première relation de correspondance est inférieure ou égale à une valeur de courant de charge cible correspondant à la même valeur de courant consommé dans la deuxième relation de correspondance,
**caractérisé en ce que** le terminal mobile comprend un écran, et le dispositif comprend en outre :
un module de détection (450) configuré pour détecter si l'écran est dans un état de fonctionnement ;
le premier sous-module de réglage (462) est configuré, si le module de détection détecte que l'écran est dans l'état de fonctionnement, pour déterminer qu'un état de courant du terminal mobile est un état d'utilisation, et interroger la première relation de correspondance selon la valeur de courant consommé pour obtenir une valeur de courant de charge cible correspondant à la valeur de courant consommé ; et
le deuxième sous-module de réglage (464) est configuré, si le module de détection détecte que l'écran est dans un état fermé, pour déterminer qu'un état de courant du terminal mobile est un état de non-utilisation, et interroger la deuxième relation de correspondance selon la valeur de courant consommé pour obtenir une valeur de courant de charge cible correspondant à la valeur de courant consommé.

4. Dispositif selon la revendication 3, **caractérisé en ce que**, le module de calcul comprend :
un sous-module de calcul de valeur de différence (442) configuré pour calculer une valeur de différence entre la valeur de courant de charge cible et la valeur de courant de charge réelle qui sont collectées à la même instance de temps d'échantillonnage ; et
un sous-module de calcul de valeur moyenne (444) configuré pour calculer une valeur moyenne de l'au moins une des valeurs de différence dans une période de temps prédéfinie comme valeur de courant consommé, la période de temps prédéfinie comprenant au moins une instance de temps d'échantillonnage.

5. Programme informatique, qui lorsqu'il est exécuté sur un processeur d'un dispositif, réalise un procédé selon l'une quelconque des revendications 1 ou 2.

6. Support d'enregistrement lisible par un ordinateur et sur lequel est enregistré un programme informatique comportant des instructions pour exécuter les étapes d'un procédé selon l'une quelconque des revendications 1 ou 2.
